# EUROPÄISCHE PATENTSCHRIFT

(11) **EP 3 197 031 B1**
(45) Veröffentlichungstag und Bekanntmachung des Hinweises auf die Patenterteilung: **23.01.2019**
(21) Anmeldenummer: 16152559.7
(22) Anmeldetag: 25.01.2016
(51) Int. Cl.: H02K 41/03, H02K 1/17, B65G 21/20, H01F 7/02, B65G 54/02

(54) **MAGNETBAHN FÜR EINE TRANSPORTVORRICHTUNG**
MAGNETIC RAIL FOR A TRANSPORT DEVICE
BANDE MAGNETIQUE POUR UN DISPOSITIF DE TRANSPORT

(43) Veröffentlichungstag der Anmeldung: 26.07.2017
(73) Patentinhaber: ETEL S.A., 2112 Môtiers (CH)
(72) Erfinder: TAMELLINI, Valerio, 2000 Neuchâtel (CH)
(74) Vertreter: Pleyer, Hans Anno

(56) Entgegenhaltungen:
- EP-A1- 2 930 830
- JP-A- H0 241 650

## Beschreibung

### GEBIET DER TECHNIK

Die vorliegende Erfindung betrifft eine Magnetbahn für eine Transportvorrichtung, mit der ein oder mehrere Läufer entlang der Magnetbahn bewegt werden können. Die Erfindung betrifft außerdem eine Transportvorrichtung, die eine solche Magnetbahn umfasst.

Mit solchen Transportvorrichtungen können Werkstücke zu und von mehreren entlang der Magnetbahn angeordneten Bearbeitungsstationen transportiert werden. Die Magnetbahn umfasst dabei sowohl lineare als auch gekrümmte Bereiche und bildet oft eine geschlossene Bahn. Als Antrieb werden Linearmotoren eingesetzt, deren Primärteile sich jeweils in einem Läufer befinden. Mehrere Läufer können sich das als Magnetbahn mit regelmäßig aneinander gereihten Magneten ausgebildete Sekundärteil teilen und dabei voneinander unabhängig bewegt werden.

### STAND DER TECHNIK

Aus der EP 2930830 A1 ist eine gattungsgemäße Magnetbahn für eine Transportvorrichtung bekannt. Diese Magnetbahn ist aus mehreren linearen Abschnitten mit jeweils einer geraden Anzahl von auf einem Träger angeordneten Magneten abwechselnder Polarität aufgebaut, wobei sich in linearen Bereichen der Magnetbahn die magnetische Ausrichtung der Magnete über aneinander grenzende Abschnitte hinweg in regelmäßigen Intervallen umkehrt. In gekrümmten Bereichen der Magnetbahn ist die Polarität zweier benachbarter, also nebeneinander liegender Magnete verschiedener Abschnitte jedoch gleich.

Diese Magnetbahn aus dem Stand der Technik lässt sich somit aus einer Vielzahl von immer gleichen Abschnitten aufbauen, wie sie auch für einen herkömmlichen Linearmotor verwendet werden. Die Abschnitte umfassen jeweils einen Träger, auf dem eine gerade Anzahl von Magneten in regelmäßigen Abständen und mit wechselnder magnetischer Ausrichtung angeordnet ist. Durch eine Aneinanderreihung einer Vielzahl solcher Abschnitte bzw. Träger lässt sich eine beliebig lange Magnetbahn erzeugen, die in den linearen Bereichen dem eines herkömmlichen Linearmotors entspricht, und die dort auch dank niedriger Rastkräfte eine sehr genaue Positionierung der Läufer ermöglicht. In den gekrümmten Bereichen wird jeder zweite Träger relativ zu seinem Vorgänger um etwa 180 Grad um eine senkrecht auf die Ebene der Magnetbahn stehende Achse verdreht eingebaut. Der Abstand zu den benachbarten Trägern wird dabei etwas vergrößert und die Ausrichtung der gewünschten Krümmung bzw. dem gewünschten Bahnradius angepasst. Durch diese Abweichungen von der regelmäßigen Periodizität der Magnetanordnung entstehen allerdings etwas größere Rastkräfte als in den linearen Bereichen.

Aus der JP H0241650 A ist ein Primärteil mit einer gekrümmten Bahn bekannt, bei dem zwischen geraden Abschnitten mit von Spulen umwickelten Zähnen zusätzliche Distanzstücke eingefügt sind, die wiederum einen von einer Spule umwickelten Zahn aufweisen.

### ZUSAMMENFASSUNG DER ERFINDUNG

Es ist daher Aufgabe der Erfindung, die in den gekrümmten Bereichen einer solchen Magnetbahn auftretenden erhöhten Rastkräfte auf möglichst einfache Weise zu reduzieren, ohne dabei auf die Vorteile zu verzichten, die die Verwendung von linearen Abschnitten einer Magnetbahn auch in gekrümmten Bereichen mit sich bringt.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird eine Magnetbahn für eine Transportvorrichtung zur Bewegung eines Läufers entlang der Magnetbahn offenbart, bei der die Magnetbahn aus mehreren linearen Abschnitten mit jeweils einer geraden Anzahl von auf einem Träger angeordneten Magneten abwechselnder Polarität aufgebaut ist. In gekrümmten Bereichen der Magnetbahn ist die Polarität zweier benachbarter Magnete verschiedener Abschnitte gleich, die V-förmigen Lücken zwischen den linearen Abschnitten sind mit ferromagnetischen Distanzstücken gefüllt. Diese Distanzstücke tragen ferromagnetische Zähne und sind ihrer Form nach auf die Reduzierung von Rastkräften optimiert.

Durch eine Optimierung der Form der Distanzstücke lässt sich die aus der Anordnung linearer Abschnitte auf gekrümmten Bahnen resultierende Störung der periodischen Magnetanordnung und die daraus resultierende zusätzliche Rastkraft erheblich reduzieren. Eine Grundplatte und der darauf angeordneter Zahn so eines Distanzstückes entsprechen hinsichtlich ihrer Abmessung weitgehend den linearen Abschnitten der Magnetbahn, so dass ein Läufer problemlos über die Distanzstücke hinweg bewegt werden kann. Die Geometrie des Zahnes kann aber durch verschiedene Maßnahmen noch zusätzlich auf eine möglichst gute Reduzierung der Rastkraft optimiert werden, wie in der Beschreibung einer Ausführungsform noch deutlich gemacht wird.

Die zusätzlich benötigten ferromagnetischen Distanzstücke stellen zwar einen gewissen Mehraufwand dar, sie sind aber fertigungstechnisch recht einfach und kostengünstig aus einem Stück herstellbar.

### KURZE BESCHREIBUNG DER ZEICHNUNGEN

Es zeigt
- Figur 1: einen gekrümmten Bereich einer Magnetbahn in der Übersicht,
- Figur 2: einen Ausschnitt dieses Bereiches im Detail.

### BESCHREIBUNG DER AUSFÜHRUNGSFORMEN

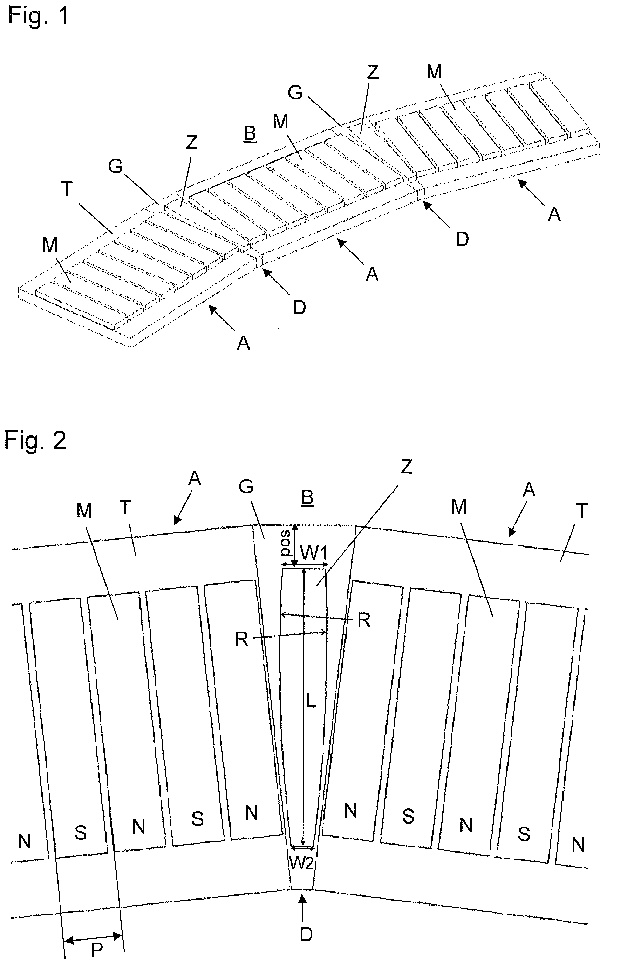

Die Figuren 1 und 2 zeigen einen gekrümmten Bereich einer Magnetbahn B, der aus mehreren linearen Abschnitten A zusammengesetzt ist. Jeder dieser Abschnitte A weist mehrere Magnete M auf, die mit abwechselnder Polarität in gleichen Abständen P entlang der Bahnrichtung auf einem Träger T angeordnet sind.

Lineare Bereiche der Magnetbahn B lassen sich durch bündig aneinander anstoßende Abschnitte A realisieren, während in den gekrümmten Bereichen die Abschnitte A mit einem gewissen Abstand und einem gewissen Winkel zueinander angeordnet werden. Die eingangs erwähnte EP 2930830 A1 erklärt ausführlich, wie dieser Abstand in Abhängigkeit vom gewünschten Bahnradius gewählt werden sollte, damit die zusätzlichen Rastkräfte, die der Abstand mit sich bringt, möglichst klein ausfallen. Die vorliegende Erfindung geht von diesem Stand der Technik aus. Die dort beschriebenen vorteilhaften Ausführungsformen bezüglich der Anordnung der Magnete tragenden Abschnitte gelten auch im Zusammenhang mit der vorliegenden Erfindung.

Es ist unvermeidlich, dass die Abweichung von der regelmäßigen Anordnung der Magnete M in gekrümmten Bereichen der Magnetbahn B zu erhöhten Rastkräften führt. Es wird daher vorgeschlagen, in den gekrümmten Bereichen der Magnetbahn B die V-förmigen Lücken zwischen den linearen Abschnitten A mit ferromagnetischen Distanzstücken D zu füllen.

Diese Distanzstücke D weisen eine ferromagnetische Grundplatte G auf, die ebenfalls V-förmig ist, und die die V-förmige Lücke zwischen den Abschnitten A ausfüllt. Der Winkel zwischen den V-förmig verlaufenden Kanten der Grundplatte G muss auf den jeweiligen Krümmungsradius der Magnetbahn B angepasst sein.

Auf der Grundplatte G ist außerdem ein ferromagnetischer Zahn Z angeordnet. Die beidseits dieses Zahnes Z liegenden Magnete M der benachbarten Abschnitte A weisen die gleiche Polarität (in der Figur 2 liegen zwei Nordpole N beidseits des Zahnes Z) auf, so dass der ferromagnetische Zahn Z sozusagen die Funktion des fehlenden Magneten übernimmt, ohne selbst ein Magnet zu sein. Da er wie die Grundplatte G aber aus einem ferromagnetischen Material besteht, kann er doch zu einer Konzentration des magnetischen Flusses beitragen, und so die Rastkräfte günstig beeinflussen.

Die Dicke der Grundplatte G in einer Richtung senkrecht zur Ebene der Magnetbahn B entspricht der Dicke der Träger T der Abschnitte A, so dass sich am Übergang zwischen Abschnitten A und Distanzstücken D keine hervorspringenden Kanten ergeben. Dies gilt auch für die Länge der aneinander stoßenden Kanten der Abschnitte A und Distanzstücke D quer zur Bahnrichtung. Durch diese Maßnahme kann für die Distanzstücke D außerdem die gleiche Befestigungstechnik verwendet werden wie für die linearen Abschnitte A, die beispielsweise mittels Schrauben oder Klammern am jeweiligen Untergrund befestigt werden können.

Die Zähne Z weisen senkrecht zur Ebene der Bahn B die gleiche Dicke wie die Magnete M auf, so dass ein Läufer problemlos über diese Distanzstücke D hinweg bewegt werden kann. In gewissen Grenzen kann die Höhe des Zahnes Z aber auch auf eine möglichst gute Reduzierung der Rastkräfte optimiert werden.

Ansonsten unterscheiden sich die Zähne Z aber von der Geometrie der Magnete M. Die Länge L der Zähne Z quer zur Bahnrichtung ist größer als die entsprechende Länge der Magnete M. Außerdem sind die Zähne Z seitlich und quer zur Bahnrichtung nicht durch gerade Kanten begrenzt, sondern vorzugsweise gekrümmte Formen wie beispielsweise durch Radien R, was ebenfalls zu einer gewissen Glättung der Rastkräfte beiträgt. Die zum Äußeren der gekrümmten Bahn B gelegene Begrenzungskante eines Zahnes Z ist mit einer Länge von W1 außerdem länger als die zum Inneren der gekrümmten Bahn B gelegene Kante, deren Länge W2 beträgt. Der Zahn Z nützt so den zur Verfügung stehenden Platz besser aus. Die Lage des Zahnes Z quer zur Bahnrichtung, in der Figur 2 durch den Abstand pos symbolisiert, ist ein weiterer freier Parameter für die Gestaltung des Distanzstückes D.

Die Parameter L, R, pos, W1 und W2 können z.B. mittels einer Simulationsrechnung für die Rastkräfte eines Läufers so auf den Krümmungsradius der Magnetbahn B optimiert werden, dass die durch die Lücken zwischen den Abschnitten A erzeugt Rastkräfte möglichst gering ausfallen. Einen Startpunkt oder Beispiel für so ein Simulationsergebnis bzw. für eine optimierte Form kann die Figur 2 liefern, die einen Zahn Z zeigt, dessen Proportionen gut mit den Magneten M verglichen werden kann. Die optimale Form der Distanzstücke D hängt ab vom gewünschten Bahnradius der jeweiligen Applikation, sowie von der Länge und Breite des verwendeten Primärteils, das den Läufer entlang der Magnetbahn B bewegt.

Als Material für die Distanzstücke D eignet sich jedes ferromagnetische Material wie beispielsweise Eisen, unlegierter Baustahl mit der Werkstoffnummer 1.0037 oder auch besonders korrosionsbeständiger INOX Stahl mit der Werkstoffnummer 1.4104.

Durch den Einsatz der Distanzstücke D lassen sich Magnetbahnen B mit gekrümmten und geraden Bereichen ebenso verwirklichen wie Kreisbahnen oder Kreissegmente.

## Patentansprüche

1. Magnetbahn für eine Transportvorrichtung zur Bewegung eines Läufers entlang der Magnetbahn (B), wobei die Magnetbahn (B) aus mehreren linearen Abschnitten (A) mit jeweils einer geraden Anzahl von auf einem Träger (T) angeordneten Magneten (M) abwechselnder Polarität aufgebaut ist, wobei in gekrümmten Bereichen der Magnetbahn (B) die Polarität zweier benachbarter Magnete (M) verschiedener Abschnitte (A) gleich ist, **dadurch gekennzeichnet, dass** in den gekrümmten Bereichen der Magnetbahn (B) V-förmige Lücken zwischen den linearen Abschnitten (A) mit ferromagnetischen Distanzstücken (D) gefüllt sind, wobei die Distanzstücke (D) eine V-förmige, ferromagnetische Grundplatte (G) und einen darauf angeordneten ferromagnetischen Zahn (Z) umfassen, der selbst kein Magnet ist.

2. Magnetbahn nach Anspruch 1, **dadurch gekennzeichnet, dass** eine Dicke der Grundplatte (G) in einer Richtung senkrecht zur Ebene der Magnetbahn (B) einer Dicke der Träger (T) entspricht.

3. Magnetbahn nach Anspruch 1 oder 2, **dadurch gekennzeichnet, dass** eine Dicke des Zahnes (Z) in einer Richtung senkrecht zur Ebene der Magnetbahn (B) einer Dicke der Magnete (M) entspricht.

4. Magnetbahn nach einem der vorhergehenden Ansprüche, **dadurch gekennzeichnet, dass** eine Länge (L) des Zahnes (Z) quer zu einer Richtung der Magnetbahn (B) größer ist als die Länge der Magnete (M) in dieser Richtung.

5. Magnetbahn nach einem der vorhergehenden Ansprüche, **dadurch gekennzeichnet, dass** der Zahn (Z) seitlich und quer zur Bahnrichtung durch eine gekrümmte Form begrenzt ist, vorzugsweise durch einen Radius (R).

6. Magnetbahn nach einem der vorhergehenden Ansprüche, **dadurch gekennzeichnet, dass** die Magnetbahn (B) aus einer Mehrzahl von identischen linearen Abschnitten (A) und Distanzstücken (D) aufgebaut ist.

7. Magnetbahn nach einem der vorhergehenden Ansprüche, **dadurch gekennzeichnet, dass** sich in linearen Bereichen der Magnetbahn (B) die Polarität benachbarter Magnete (M) über aneinander grenzende Abschnitte (A) hinweg in regelmäßigen Intervallen (P) umkehrt.

8. Transportvorrichtung mit einem Linearantrieb, umfassend eine Magnetbahn (B) nach einem der vorhergehenden Ansprüche, bei der die die linearen Abschnitte (A) und die Distanzstücke (D) ein Sekundärteil des Linearantriebs bilden.

## Claims

1. Magnetic track for a transport device for moving a traveller along the magnetic track (B), the magnetic track (B) being built up from multiple linear sections (A) each having an even number of magnets (M) of alternating polarity arranged on a support (T), the polarity of two adjacent magnets (M) of different sections (A) being the same in curved regions of the magnetic track (B), **characterized in that** in the curved regions of the magnetic track (B), V-shaped gaps between the linear sections (A) are filled with ferromagnetic spacers (D), wherein the spacers (D) comprise a V-shaped ferromagnetic baseplate (G) and a ferromagnetic tooth (Z) arranged thereon, which itself is not a magnet.

2. Magnetic track according to Claim 1, **characterized in that** a thickness of the baseplate (G) in a direction perpendicular to the plane of the magnetic track (B) corresponds to a thickness of the support (T).

3. Magnetic track according to Claim 1 or 2, **characterized in that** a thickness of the tooth (Z) in a direction perpendicular to the plane of the magnetic track (B) corresponds to a thickness of the magnets (M).

4. Magnetic track according to one of the preceding claims, **characterized in that** a length (L) of the tooth (Z) transversely with respect to a direction of the magnetic track (B) is greater than the length of the magnets (M) in this direction.

5. Magnetic track according to one of the preceding claims, **characterized in that** the tooth (Z) is bounded laterally and transversely with respect to the track direction by a curved shape, preferably by a radius (R).

6. Magnetic track according to one of the preceding claims, **characterized in that** the magnetic track (B) is built up from a plurality of identical linear sections (A) and spacers (D).

7. Magnetic track according to one of the preceding claims, **characterized in that** in linear regions of the magnetic track (B), the polarity of adjacent magnets (M) over mutually adjacent sections (A) reverses at regular intervals (P).

8. Transport device having a linear drive comprising a magnetic track (B) according to one of the preceding claims, in which the linear sections (A) and the spacers (D) form a secondary part of the linear drive.

## Revendications

1. Voie d'aimants pour un dispositif de transport servant à déplacer un induit le long de la voie d'aimants (B), la voie d'aimants (B) étant constituée de plusieurs sections linéaires (A) comprenant respectivement un nombre pair d'aimants (M) de polarités alternées disposés sur un support (T), les polarités de deux aimants voisins (M) de sections différentes (A) étant identiques dans des régions incurvées de la voie d'aimants (B), **caractérisée en ce que**, dans les régions incurvées de la voie d'aimants (B), des espaces en forme de V entre les sections linéaires (A) sont remplis de pièces d'espacement (D) ferromagnétiques, les pièces d'espacement (D) comprenant une plaque de base (G) ferromagnétique en forme de V et une dent (Z) ferromagnétique disposée sur celle-ci, la dent elle-même n'étant pas un aimant.

2. Voie d'aimants selon la revendication 1, **caractérisée en ce qu'**une épaisseur de la plaque de base (G) dans une direction perpendiculaire au plan de la voie d'aimants (B) correspond à une épaisseur du support (T).

3. Voie d'aimants selon la revendication 1 ou 2, **caractérisée en ce qu'**une épaisseur de la dent (Z) dans une direction perpendiculaire au plan de la voie d'aimants (B) correspond à une épaisseur des aimants (M).

4. Voie d'aimants selon l'une quelconque des revendications précédentes, **caractérisée en ce qu'**une longueur (L) de la dent (Z) transversalement à une direction de la voie d'aimants (B) est supérieure à la longueur des aimants (M) dans cette direction.

5. Voie d'aimants selon l'une quelconque des revendications précédentes, **caractérisée en ce que** la dent (Z) est limitée latéralement et transversalement à la direction de voie par une forme incurvée, de préférence par un rayon (R).

6. Voie d'aimants selon l'une quelconque des revendications précédentes, **caractérisée en ce que** la voie d'aimants (B) est constituée d'une pluralité de sections linéaires (A) et de pièces d'espacement (D) identiques.

7. Voie d'aimants selon l'une quelconque des revendications précédentes, **caractérisée en ce que**, dans des régions linéaires de la voie d'aimants (B), les polarités d'aimants voisins (M) s'inversent à intervalles réguliers (P) sur des sections (A) adjacentes les unes aux autres.

8. Dispositif de transport comprenant un entraînement linéaire, comportant une voie d'aimants (B) selon l'une quelconque des revendications précédentes, dans lequel les sections linéaires (A) et les pièces d'espacement (D) forment une partie secondaire de l'entraînement linéaire.
